# EUROPÄISCHE PATENTANMELDUNG

(11) **EP 3 977 858 A1**
(43) Veröffentlichungstag der Anmeldung: **06.04.2022**
(21) Anmeldenummer: 21200333.9
(22) Anmeldetag: 30.09.2021
(51) Int. Cl.: A01N 59/16, A01N 31/08, A01N 31/16, A01N 43/16, A01N 65/22, A01N 65/24, A01N 65/28, A01P 1/00

(54) **ANTIVIRALE DESINFIZIERENDE HANDCREME**

(30) Priorität: 01.10.2020 DE 102020125665
(71) Anmelder: Hans Karrer GmbH, 86153 Augsburg (DE)
(72) Erfinder: KARRER, Hans, 86153 Augsburg (DE)
(74) Vertreter: Ter Meer Steinmeister & Partner

(57) **Zusammenfassung**

Bereitgestellt wird eine antivirale desinfizierende Handcreme, die eine mit Mikrosilber versehene Creme darstellt, wobei die Zubereitung zusätzlich einen Pflanzenextrakt oder ätherische Öle enthält. Die topische Zusammensetzung ist vorzugsweise zur Desinfektion der Hände vorgesehen.

## Beschreibung

Die vorliegende Erfindung betrifft eine antivirale desinfizierende topische Handcreme auf der Basis von Mikrosilber in Kombination mit ätherischen Ölen.

Silber tötet Bakterien, Viren, Pilze und andere Mikroorganismen. Silber kann über 650 Arten von pathogenen Mikroorganismen bekämpfen und kann auch neue Stämme von Bakterien oder Viren, die bisher noch nicht bekannt waren, wirksam eindämmen oder abtöten. Auf dieser Basis kann erfindungsgemäß ein potentes antibakterielles, vor allem antivirales topisches Breitspektrum-Desinfektionsmittel mit Mikrosilber sowie mit ätherischen Ölen, zur Desinfektion unter Berücksichtigung der Hauteigenschaften bereitgestellt werden, das sicher, zuverlässig und bequem ist.

### Technischer Hintergrund:

Handdesinfektion spielt bei epidemischen und pandemischen Ereignissen, die durch Mikroorganismen, z.B. Viren, hervorgerufen werden eine zentrale Rolle. Viele krankheitserregende Mikroorganismen werden per Schmierinfektion übertragen. Insbesondere bei umhüllten Viren, wie dem Sars-Cov-19 Virus, hilft gründliches Händewaschen mit Seife und Wasser oder die Desinfektion der Hände mit einer antiviralen Lösung, z.B. einer Lösung oder einem Gel, das hohe Anteile an Alkanolen, wie Ethanol oder Isopropanol, enthält. Der Nachteil einer bei epidemischen oder pandemischen Ereignissen erforderlichen Handdesinfektion durch Händewaschen mit Seife oder mit alkanolhaltigen Gels oder Lösungen besteht in der permanenten Entfettung der Haut. Dadurch wird die Haut trocken und rissig und empfänglicher für schädliche Mikroorganismen.

Aufgabe der Erfindung ist die Bereitstellung eines topischem Mittels, das in der Lage ist die Entfettung der Haut weitgehend zu unterbinden und eine Rückfettung bei Einsatz von Wasser und Seife oder alkanolhaltigen Gelen oder Lösungen zu ermöglichen.

Die Aufgabe wird gelöst durch die Bereitstellung eines Mittels zur topischen Desinfektion, insbesondere der Hände, umfassend eine Zusammensetzung aus

| Inhaltsstoff | (Gewichts-%) |
|---|---|
| Grundlage | 5-30 |
| Silicone | 0-20 |
| Feuchthaltemittel | 5-20 |
| Verdickungsmittel | 6-12 |
| Alkanol | 0-10 |
| Weitere Inhaltsstoffe | 0-10 |
| Emulgatoren | 0-5 |
| Konservierungsstoffe, antimikrobielle Stoffe | 0-2 |
| Ätherische Öle | 0,05-5 |
| Mikrosilber | 0,01-0,3 |
| Aqua | bis 100 |

Weitere bevorzugte Ausführungsformen sind in den Unteransprüchen definiert. Innerhalb der Beschreibung und den Ansprüchen beziehen sich Prozent- und Teilangaben auf das Gewicht, sofern nichts anderes ausgewiesen ist. Für kosmetische Wirkstoffe und Inhaltsstoffe werden in der vorliegenden Beschreibung und den Ansprüchen die INCI-Namen verwendet, sofern nichts anderes ausgewiesen ist.

### Beschreibung der bevorzugten Ausführungsformen

Die erfindungsgemäße Zusammensetzung umfasst eine Grundlage, die aus Ölen, Wachsen und/oder Fetten ausgewählt ist, ein Feuchthaltemittel, das aus Glycerin, 1,2-Ethandiol, Milchsäure, Polyethylenglycol, Natriumlactat (Natriumsalz der Milchsäure) und Sorbit ausgewählt ist, ein Verdickungsmittel, das aus einem Derivat bzw. Polymerisat von (Meth)acrylsäure und/oder Xanthan ausgewählt ist und gegebenenfalls Emulgatoren, die aus Estern oder ethoxylierten und/oder propoxylierten Fettalkaholen, Fettsäuren oder Zuckeralkoholen ausgewählt sind. Alternativ zu Emulgatoren kann die vorstehend genannte Grundlage so aufgebaut sein, dass sie selbstemulgierend ist, z.B. auf der Basis von Phosphocholinlipiden, wie veganes Lecithin aus Soja oder Algen aber auch tierisches Lecithin.

Die Grundlage des erfindungsgemäßen Mittels kann im Wesentlichen aus fetten Materialien, nämlich Ölen, Wachsen oder Fetten bestehen. Die Öle können pflanzlicher oder mineralischer Herkunft sein. Beispiele für Ölkomponenten sind das Veresterungsprodukt von Glycerin mit Caprinsäure und Caprylsäure (1:3), Cetylstearylalkohol, ein Gemisch aus Cetyl- und Stearylalkohol, Sebacinsäuredibutylester, Dioctylether, Adipinsäure-Diisodecylester, Polydimethylsiloxan, Stearinsäure-Glycerinester, Myristinsäure-Isopropylester, Palmitinsäure-Isopropylester, Macadamiaöl; 2-Octyldodecan-1-ol, Hartparaffin, mikrokristallines Wachs, Ozokerit, Ceresin, Vaselin, flüssiges Paraffin, Paraffinöl, Avocadoöl, Süßmandelöl, Jojobaöl, Stearinsäure, Octadecansäure, n-Octadecansäure einzeln oder als Gemisch beliebiger der vorstehend genannten Öle. Diese Grundlage kann in einer Menge von 5 bis 30 Gew.-%, vorzugweise 10 bis 25 Gew.-%, insbesondere 15 bis 20 Gew.-% oder 20 bis 30 Gew.-% verwendet werden.

Ausgewählte Silicone sind (als INCI-Namen) Lauryl Dimethicone/Polyglycerin-3 Crosspolymer, Lauryl Polyglyceryl-3 Polydimethylsiloxyethyl Dimethicone, Drometrizole Trisiloxane, Polysilicone-2, PEG-11 Methyl Ether Dimethicone, Lauryl Dimethicone, Dimethicone Crosspolymer, Behenoxy Dimethicone, PEG/PPG-19/19 Dimethicone, Polysilicone-13, Bis-PEG-12 Dimethicone, Pca Dimethicone, Dimethicone PEG-8 Laurate, PEG-8 Dimethicone, Perfluorononylethyl Stearyl Dimethicone, Phage-10 Dimethicone, C30-45 Alkyl Methicone, Perfluorononyl Dimethicone Lauryl PEG/PPG-18/18 Methicone, PEG-3 Dimethicone, Cetyl Dimethicone, Diphenyl Dimethicone/Vinyl Diphenyl Dimethicone/Silsesquioxane Crosspolymer, Lauryl PEG-8 Dimethicone, Trimethylsiloxysilicate Cetearyl Methicone, Lauryl PEG-9 Polydimethylsiloxyethyl Dimethicone, Diphenylsiloxy Phenyl Trimethicone, Hydroxypropyl Dimethicone Behenate, Cyclotetrasiloxane PEG/PPG-20/15 Dimethicone, Methyl Trimethicone Disiloxane Cyclohexasiloxane, PEG-6 Methyl Ether Dimethicone PEG-12 Dimethicone, C30-45 Alkyl Cetearyl Dimethicone Crosspolymer, Bis-PEG-15 Methyl Ether Dimethicone, PEG-10 Dimethicone, Dimethicone PEG-7 Phosphate, PEG-40/PPG-8 Methylaminopropyl/Hydroxypropyl Dimethicone Copolymer, Trisiloxane, Ethyl Methicone, Dimethicone/Vinyl Dimethicone, Cyclopentasiloxane, Bis-Butyldimethicone Polyglyceryl-3, Dimethicone/Bis-Isobutyl PPG-20 Crosspolymer, Dimethicone/Phenyl Vinyl Dimethicone Crosspolymer, Dimethiconol, Simethicone Acrylate / Ethylhexyl Acrylate / Dimethicone Methacrylate Copolymer, Caprylyl Methicone, Cetyl Dimethicone/Bis-Vinyldimethicone Crosspolymer, Diphenyl Dimethicone, Hexyl Dimethicone, Dimethicone Crosspolymer-3, Bis-PEG-15 Dimethicone/Ipdi Copolymer, Adipic Acid/Neopentyl Glycol Crosspolymer, Caprylyl Trimethicone, Laurylpyrid-9 Polydimethylsiloxyethyldimethicone, Phenyl Trimethicone, Divinyldimethicone/Dimethicone Copolymer, Cetyl PEG/PPG-10/1 Dimethicone, Bis-Aminopropyl Dimethicone, Bis-PEG/PPG-16/16 PEG/PPG-16/16 Dimethicone, Dimethicone Silylate, PEG/PPG-14/4 Dimethicone, Trimethylsiloxyamodimethicone, Stearyl Dimethicone, Bis-Vinyldimethicone/PEG-10 Dimethicone Crosspolymer, Phenethyl Dimethicone, PEG-9 Polydimethylsiloxyethyl Dimethicone, Bis-PEG/PPG-20/5 PEG/PPG-20/5 Dimethicone, Aminopropyl Dimethicone, PEG/PPG-20/20 Dimethicone, Amodimethicone, Trimethylated Silica/Dimethicone, Dimethicone/Polyglycerin-3 Crosspolymer, Bis-PEG-18 Methyl Ether Dimethyl Silane, Hydrogen Dimethicone, Cetyl Diglyceryl Tris(Trimethylsiloxy)Silylethyl Dimethicone, Stearoxy Dimethicone, Triethoxysilylethyl Polydimethylsiloxyethyl Hexyl Dimethicone, Divinyldimethicone/Dimethicone Crosspolymer, Trimethylsiloxyphenyl Dimethicone, Lauryl PEG-10 Tris[Trimethylsiloxy]Silylethyl Dimethicone, Vinyl Dimethicone/Methicone Silsesquioxane Crosspolymer, Dimethicone/PEG-10/15 Crosspolymer, Dimethicone/Divinyldimethicone/Silsesquioxane Crosspolymer, PEG-12 Dimethicone/PPG-20 Crosspolymer, Cetearyl Dimethicone Crosspolymer Polypropylsilsesquioxane, PEG/PPG-20/22 Butyl Ether Dimethicone, Disodium PEG-12 Dimethicone Sulfosuccinate, Cyclomethicone, Acrylates/Dimethicone Copolymer, Piperidine-10,1 Dimethicone, Dimethicone Polysilicone-15, Polysilicone-14, Bis-Stearyl Dimethicone, PEG/PPG-18/18 Dimethicone, Neopentyldimethicone, Phenyl Methicone, Laurylpyridyl-9 Polydimethylsiloxy Ethyl Dimethicone, Methoxy PEG/PPG-25/4 Dimethicone, Triethoxysilylethyl Polydimethylsiloxyethyl Dimethicone, Polymethylsilsesquioxane Polysilicone-11, Bis-Phenylpropyl Dimethicone, Methicone Dimethicone/Vinyl Dimethicone Crosspolymer, Poly(Glycol Adipate)/Bis-Hydroxyethoxypropyl Dimethicone Copolymer, PEG-10 Dimethicone/Vinyl Dimethicone Crosspolymer, Bis-PEG/PPG-14/14 Dimethicone, Dimethicone PEG-7 Isostearate, Silicone Elastomers Blend, C30-45 Alkyl Dimethicone, PEG-12 Dimethicone Crosspolymer Polysilicone-9, Dimethicone Propyl Pg-Betaine, Vinyl Dimethicone, PEG/PPG-20/6 Dimethicone, PEG/PPG-20/23 Dimethicone, Acrylates/Ethylhexyl Acrylate/Dimethicone Methacrylate Copolymer, Polyglyceryl-3 Polydimethylsiloxyethyl Dimethicone, Dimethicone/Methicone Copolymer. Diese Stoffen werden in einer Menge von 0 bis 20 Gew.-%, insbesondere 2 bis 16 Gew.-% oder 5 bis 18 Gew.-% bzw. 7 bis 12 Gew.-% eingesetzt.

Folgende Feuchthaltemittel können u.a. eingesetzt werden: Glycerin, 1,2-Ethandiol, Milchsäure, Polyethylenglycol, Natriumlactat (Natriumsalz der Milchsäure) und/oder Sorbit. Das Feuchthaltemittel wird in einer Menge im Bereich von 5 bis 20 Gew.-%, vorzugsweise im Bereich von 10 bis 15 Gew.-% oder im Bereich von 7 bis 18 Gew.-%, auch im Bereich von 5 bis 9 Gew.-%.

Als Verdickungsmittel können folgende eingesetzt werden: ein Polymer aus Methacrylsäure, Ethylacrylat und Methylmethacrylat, ein Polymer aus Acrylsäurealkylestern (C10-C30), Acrylsäure, Methacrylsäure und/oder anderen Alkylacrylaten; kreuzverknüpft mit Propenyl-(allyl-)modifizierten Zuckern, Agar-Agar, Ammoniumalginat (Ammoniumsalz der Alginsäure), Amylopektin, Carrageen (Kohlenhydrate aus Rotalgen), Cellulose, Natrium-Carboxymethylcellulose, N-(Hydroxyethyl)-Kokosfettsäureamid, Kieselsäure, mikrokristallines Wachs, Ozokerit, Ceresin, Distearinsäure-Polyethylenglycolester, Veresterungsprodukt aus Ölsäure und ethoxyliertem Propylenglycol, Polyvinylalkohol, Polymer aus Acrylsäure, Methacrylsäure und deren Estern (Natriumsalz), Veresterungsprodukt von Stärke mit Phosphorsäure, Copolymer aus Vinylpyrrolidon und Hexadecen und/oder Xanthan. Bevorzugt sind Polyacrylsäurederivate. Das Verdickungsmittel wird in einer Menge von 6 bis 12 Gew.-%, vorzugsweise 8 bis 10 Gew.-%, auch 7 bis 9 Gew.-% oder 6 bis 11 Gew.-% eingesetzt.

Das Alkanol kann aus Ethanol, n-Propanol, Isopropanol und Gemischen davon ausgewählt sein. Ethanol ist aus Verfügbarkeitsgründen bevorzugt. Die vorgenannten Alkanole können ggf. auch höhere Alkohole enthalten, wie n-Butanol, sek.-Butanol, tert.-Butanol, Amylalkohole (alle Isomeren) oder Hexanole, soweit dies die Homogenität des Mittels nicht beeinträchtigt. Das Alkanol kann in einer Menge von 0 bis 10 Gew.-%, vorzugsweise 1 bis 9 Gew.-%, bevorzugter 2 bis 8 Gew.-%, auch 3 bis 7 Gew.-% oder 4 bis 6 Gew.-% bzw. 3 bis 5 Gew.-% eingesetzt werden.

Emulgatoren können in einer Menge von 0 bis 5 Gew.-%, vorzugsweise 1 bis 3 Gew.-% auch 2 bis 4 Gew.-% eingesetzt werden. Beispiele für Emulgatoren sind Polyethylenglycolether des Cetearylakohols (durchschnittlich 20 Einheiten -CH2-CH2-O-), Kondensationsprodukt von Cetearylalkohol und Glucose, Copolymer aus Cetyl-Dimethicon (Polydimethylsiloxan) und alkoxyliertem Dimethicon (durchschnittlich 10 Einheiten Ethylenoxid [-CH2-CH2-O-] und 1 Einheit Propylenoxid [-CH2-CH(CH3)-O-]), N-(Hydroxyethyl)-Kokosfettsäureamid, Ölsäure-Glycerinester, Glycerinmonooleat, 9-Octadecensäure-Glycerinester (1:1), Ölsäure-Glycerinester, Glycerinmonooleat, 9-Octadecensäure-Glycerinester (1:1); mit Anteilen von Kalium- oder Natriumoleat, Glycerinstearat, Glycerinmonostearat, Stearinsäure-Glycerinester, Glycerinstearat, Glycerinmonostearat, Stearinsäure-Glycerinester; mit Anteilen von Kalium- oder Natriumstearat, Stearinsäureglycolester (1:1), Glycolstearat; mit Anteilen von Kalium- oder Natriumstearat, Wollwachs, Wollfett, Lanolin, Lecithin, Veresterungsprodukt der Ölsäure mit Methylglucose (2:1), ethoxyliert (durchschnittlich 120 Einheiten -CH2-CH2-O-), Veresterungsprodukt von Kokosfettsäuren und Ölsäure mit exthoxyliertem Glycerin (durchschnittlich 18 Einheiten -CH2-CH2-O-) Stearinsäureglycerinester (Glycerinmonostearat), ethoxyliert (durchschnittlich 20 Einheiten -CH2-CH2-O-), Polyethylenglycolester des Stearinsäure (durchschnittlich 40 Einheiten -CH2-CH2-O-), Kokosfettsäure-Glycerinester, ethoxyliert (durchschnittlich 7 Einheiten -CH2-CH2-O-), Hydriertes und ethoxyliertes Rizinusöl (durchschnittlich 7 Einheiten -CH2-CH2-O-), Veresterungsprodukt der Isostearinsäure mit Polyglycerin (2:1, drei Glycerin-Einheiten), Veresterungsprodukt der Stearinsäure mit Polyglycerin und Methylglucose (2:1:1, drei Glycerin-Einheiten), Veresterungsprodukt von polymerisierter Ricinolsäure mit Polyglycerin (drei Glycerin-Einheiten), Veresterungsprodukt der Caprylsäure mit Polyglycerin (vier Glycerin-Einheiten), Veresterungsprodukt der Laurinsäure mit Sorbitol, ethoxyliert (durchschnittlich 20 Einheiten -CH2-CH2-O-), Phosphorsäure-Cetylester, Cetylphosphat (Kaliumsalz), Kaliumstearat (Kaliumsalz der Stearinsäure), Mischung aus Natriumdodecylpoly(oxyethylen)sulfat und Natriumtridecylpoly(oxyethylen)sulfat , Natriumstearat (Natriumsalz der Stearinsäure), Laurinsäure-Sorbitolester, Ölsäure-Sorbitolester, Stearinsäure-Sorbitolester, (Poly-)Ethylenglycolether des Stearylakohols (durchschnittlich 2 Einheiten -CH2-CH2-O-), Polyethylenglycolether des Stearylakohols (durchschnittlich 21 Einheiten -CH2-CH2-O-), Stearinsäure, Octadecansäure, n-Octadecansäure, Veresterungsprodukt von Laurinsäure mit Saccharose (Rohrzucker), Veresterungsprodukt von Myristinsäure mit Saccharose (Rohrzucker), Veresterungsprodukt von Ricinolsäure mit Saccharose (Rohrzucker) und/oder Polyethylenglycolether des Cetearylakohols (durchschnittlich 4 Einheiten -CH2-CH2-O-), Veresterungsprodukt mit Phosphorsäure (3:1).

Weitere Inhaltsstoffe können neben Emulgatoren UV-Filter, Strukturierungsmittel, Perlglanzmittel, Vitamine, Farbstoffe, Duftstoffe etc. sein. Als Konservierungsstoffe können aseptische Mittel, z.B. Chlorhexidin, Cetylpyridiniumchlorid und/oder Benzalkoniumchlorid in einer Menge von 0,05 bis 0,5 Gew.-%, und/oder auch klassische Konservierungsstoffe, wie Triclosan in einer Menge von bis zu 0,3%, eingesetzt werden. Diese Stoffe können einen zusätzlichen antiviralen Effekt ggf. einen diesbezüglichen synergistischen Effekt hervorrufen.

Die Wirkstoffe Mikrosilber und ätherische Öle werden während oder nach der Zubereitung zugemischt.

Das Mittel wird durch übliche Emulgiertechnik in der üblichen Reihenfolge der Zugabe der Bestandteile zubereitet. Das Ergebnis ist eine weiße bis beige Creme.

Die Mikrosilberpartikel können während der Formulierung vorstehend angeführter Zusammensetzung einverleibt werden. Die Größe der Silberpartikel beträgt zwischen 1 bis 100 µm. Die Partikel können aus agglomerierten Primärteilchen bestehen. Die Primärpartikel weisen einen mittleren Durchmesser zwischen 10 und 200 nm, vorzugsweise zwischen 15 und 80 nm auf. Der mittlere Abstand zwischen den jeweils äußersten Primärpartikeln an der Oberfläche der Agglomerate liegt im Bereich von 20 bis 200 nm, vorzugsweise 100 bis 200 nm.

Die Zusammensetzungen der vorliegenden Erfindung umfassen Mikrosilber, das aus metallischem Silber hergestellt wird und als Wirkstoff in den Zusammensetzungen der vorliegenden Erfindung zur antiviralen Behandlung normaler, gereizter oder entzündeter Haut, wie empfindlicher Haut, dient. In beispielhaften Ausführungsformen der vorliegenden Erfindung besteht die Mikrosilberzusammensetzung im Wesentlichen aus metallischem Silber im Bereich von etwa 99,5 Prozent bis etwa 100 Prozent, von etwa 99,6 Prozent bis etwa 100 Prozent, von etwa 99,7 Prozent bis etwa 100 Prozent, von etwa 99,8 Prozent auf etwa 100 Prozent und von etwa 99,9 Prozent auf etwa 100 Prozent von reinem Silber oder umfasst oder enthält dieses. Eine veranschaulichende Ausführungsform von Mikrosilber der vorliegenden Erfindung umfasst etwa 99,7 Prozent, etwa 99,8 Prozent, etwa 99,9 Prozent oder etwa 100 Prozent reines Silber.

Unter Mikrosilber wird auch ein mechanisch durch Mikrovermahlen hergestelltes Silber verstanden, im Gegensatz zu dem auch verwendbaren, chemisch ausgefällten sogenannten Nanosilber (kolloidales Silber).

Mikrosilber kann in der vorliegenden Erfindung auch in Form eines vorher präparierten Fluids verwendet werden. Eine veranschaulichende Ausführungsform von Mikrosilber der vorliegenden Erfindung umfasst jedoch ein metallisches Silberpulver. Das Mikrosilberpulver umfasst hochporöse Partikel in Mikrogröße.

Die Mikropartikel des Mikrosilberpulvers können eine Größe aufweisen, die von etwa 1 Mikrometern (Mikrometer = µm) bis etwa 100 Mikrometern, von etwa 6 Mikrometern bis etwa 20 Mikrometern, von etwa 2 Mikrometern bis etwa 10 Mikrometern, von etwa 8 Mikrometern bis etwa 20 Mikrometern, von etwa 2 Mikrometern bis etwa 8 Mikrometern reicht und bei oder etwa um 10 oder um 5 oder um 3 Mikrometern Größe liegt.

Die Partikel in Mikrogröße des Mikrosilberpulvers liefern eine wirksame und lang anhaltende antibakterielle Breitbandwirkung (z.B. Gram + VE / -VE) sowie eine antivirale Wirkung. Darüber hinaus sorgt eine poröse Struktur des Mikrosilberpulvers für eine effiziente Silberionenerzeugung bei geringen Einsatzmengen. Ferner hilft eine poröse Struktur des Mikrosilberpulvers dem Mikrosilber, sich aufgrund der Mikropartikel physikalisch an die Hautoberfläche zu binden und / oder daran zu "haften". Daher führt poröses Mikrosilber, das die Mikropartikel umfasst, zu einer natürlichen, hautfreundlichen, sicheren und lang anhaltenden antimikrobiellen und antiviralen Wirkung auf die Hautoberfläche einer Person.

Die vorliegende Erfindung ist auf desinfizierende Zusammensetzungen gerichtet, die Mikrosilber umfassen, wobei Mikrosilber etwa 0,01 Prozent bis etwa 10 Prozent, von etwa 0,01 Prozent bis etwa 3 Prozent, von etwa 0,01 Prozent bis etwa 0,5 Prozent, von etwa 0,05 Prozent bis etwa 0,5 Prozent, von etwa 0,05 Prozent bis etwa 0,25 Prozent, von etwa 0,1 Prozent bis etwa 0,5 Prozent oder von etwa 0,05 Prozent bis etwa 0,2 Prozent, von 0,075 bis 0,25 Prozent, von 0,075 bis 0,25 Prozent, von 0,08 bis 0,275 Prozent des Gewichts der Zusammensetzung umfasst, daraus besteht oder im Wesentlichen daraus besteht. Insbesondere kann eine Ausführungsform der Zusammensetzung der vorliegenden Erfindung etwa 0,01 Prozent bis etwa 0,5 Prozent Mikrosilber und typischerweise etwa 0,05 Prozent bis etwa 0,25 Prozent Mikrosilber umfassen. Zusätzlich kann eine Ausführungsform der Zusammensetzung der vorliegenden Offenbarung etwa 0,05 Prozent bis etwa 1 Prozent Mikrosilber und typischerweise etwa 0,1 Prozent bis etwa 0,5 Prozent Mikrosilber umfassen. Ferner umfasst eine Ausführungsform der Zusammensetzung der vorliegenden Offenbarung etwa 0,01 Prozent bis etwa 0,5 Prozent Mikrosilber und typischerweise etwa 0,05 Prozent bis etwa 0,2 Prozent Mikrosilber.

Antivirale Mittel im Sinne der Erfindung sind alle Stoffe natürlichen Ursprungs, die eine nachweisbare antivirale Wirkung aufweisen. Dies gilt vor allem für pflanzliche Extrakte und ätherische Öle.

Inhaltsstoffe dieser ätherischen Öle und entsprechender Pflanzenextrakte, wie Eukalyptusextrakt, Salbeiextrakt, Teebaumöl, Lorbeerextrakt und Thymianextrakt, sind 1,8-Cineol, Thymol, Limonen, Citral und Carvacrol, insbesondere Thymol und 1,8-Cineol (Eucalyptol) und/oder Carvacrol (Isothymol). Thymol und 1,8-Cineol können in einem Gemisch von 1:100 bis 100:1 eingesetzt werden. Ähnliches gilt für Mischungen aus zwei von Carvacrol mit Thymol oder 1,8-Cineol, oder dem Tripel (1,8-Cineol, Thymol, Carvacrol), nämlich von 1:100:100 bis zu einem der folgenden Verhältnisse 100:1:100; 100:100:1; 1:1:100; 1:100:1; 100:1:1. Bevorzugt ist ein Gemisch mit einem Gewichtsverhältnis von Thymol zu 1,8-Cineol von 1:10 bis 1:1. Bevorzugte Bereiche sind 0 bis 0,3 Gew.-% Thymol, 0 bis 0,3 Gew.-% Eucalyptol (1,8-Cineol) und 0,3 Gew.-% Teebaumöl. Die Bereich gelten im übrigen auch für die weiteren angeführten Pflanzenextrakte oder ätherischen Öle.

Obwohl die meisten ätherischen Öle bereits einen angenehmen Duft aufweisen, mag es vorteilhaft sein, dem Produkt einen verbessernden Duftstoff zuzusetzen. Der Duftstoff kann aus üblicherweise verwendeten Duftstoffen ausgewählt werden, wie Patschuli, Moschus, Ylang-Ylang, Speick, Rosenwasser, Lavendel, Zitrusdüften etc., sofern grundsätzlich eine allergische Wirkung ausgeschlossen werden kann.

Antivirale Mittel im Sinne der Erfindung sind alle Stoffe natürlichen Ursprungs, die eine nachweisbare antivirale Wirkung aufweisen. Dies gilt vor allem für pflanzliche Extrakte und ätherische Öle.

Die pflanzlichen Extrakte bzw. die ätherischen Öle können während der Zubereitung der Creme-Grundlage oder während der Zubereitung der Mikrosilber enthaltenden Creme-Grundlage einverleibt werden. Das Verfahren erfolgt in an sich bekannter Weise.

Die so hergestellten Präparate können in Behälter, z.B. Tuben, Dosen, Fläschchen etc. gefüllt werden.

### Beispiele

### Beispiel 1

Eine Creme mit nachstehender Zusammensetzung wird in einer üblichen Emulgieranlage zubereitet, wobei während der Zubereitung Mikrosilber und ätherisches Öl hinzugefügt wird.

| Inhaltsstoff | (Gewichts-%) |
|---|---|
| Veresterungsprodukt von Glycerin mit Caprinsäure und Caprylsäure (1:3) | 25 |
| Lauryl Dimethicone/Polyglycerin-3 | 5 |
| Glycerin | 5 |
| Carbomer | 2 |
| Alkanol | 3 |
| Polyethylenglycolether von Cetearylakohol | 4 |
| Hydriertes Rizinusöl | 5 |
| Thymol | 0,1 |
| 1,8-Cineol | 0,2 |
| Mikrosilber | 0,01-0,3 |
| Aqua | bis 100 |

### Beispiel 2

Das Beispiel 1 wird wiederholt mit der Ausnahme, dass zusätzlich Teebaumöl in einer Menge von 0,15 Gew.-% hinzugefügt wird.

### Beispiel 3

Das Beispiel 2 wird wiederholt mit der Ausnahme, dass anstatt Thymol die gleiche Menge Carvacrol hinzugefügt wird.

### Beispiel 4

Das Beispiel 1 wird wiederholt mit der Ausnahme, dass Chlorhexidin in einer Menge von 0,1 Gew.-% hinzugefügt wird.

## Patentansprüche

1. Mittel zur topischen Desinfektion, nämlich eine Zusammensetzung umfassend
| Inhaltsstoff | (Gewichts-%) |
|---|---|
| Grundlage | 5-30 |
| Silicone | 0-20 |
| Feuchthaltemittel | 5-20 |
| Verdickungsmittel | 6-12 |
| Alkanol | 0-10 |
| Weitere Inhaltsstoffe | 0-10 |
| Emulgatoren | 0-5 |
| Konservierungsstoffe, antimikrobielle Stoffe | 0-2 |
| Ätherische Öle | 0,05-0,8 |
| Mikrosilber | 0,01-0,3 |
| Aqua | bis 100 |
wobei die weiteren Inhaltsstoffe aus UV-Filter, Strukturierungsmitteln, Perlglanzmittel, Farbstoffe und Duftstoffe ausgewählt sind.

2. Mittel nach Anspruch 1, wobei das Mikrosilber eine Partikelgröße von 1 bis 100 µm aufweist.

3. Mittel nach Anspruch 1 oder 2, wobei das antivirale Mittel aus pflanzlichen Stoffen und/oder ätherischen Ölen ausgewählt ist.

4. Mittel nach einem der vorstehenden Ansprüche 1 bis 3, wobei die pflanzlichen Stoffe ausgewählt sind aus Melissenextrakt, Salbeiextrakt, Teebaumöl, Lorbeerextrakt und Thymianextrakt.

5. Mittel nach einem der vorstehenden Ansprüche 1 bis 3, wobei die antiviralen Stoffe aus der Gruppe 1,8-Cineol, Thymol und Carvacrol ausgewählte ätherische Ölen sind.

6. Mittel nach einem der Ansprüche 1 bis 5, wobei die antiviralen Stoffe in einer Menge von 0,1 bis 0,5 Gew.-% eingesetzt werden.

7. Mittel nach einem der Ansprüche 1 bis 6, das als Konservierungsstoff zusätzlich ein antiseptisches Mittel in einer Menge von 0,05 bis 0,5 Gew.-% und/oder Triclosan in einer Menge von bis zu 0,3 Gew.-% enthält.

8. Mittel nach Anspruch 7, wobei das antiseptische Mittel aus der Gruppe Chlorhexidin, Cetylpyridiniumchlorid und Benzalkoniumchlorid ausgewählt ist.

9. Mittel nach einem der Ansprüche 1 bis 8, wobei die Grundlage aus Ölen, Wachsen und/oder Fetten ausgewählt ist, das Feuchthaltemittel aus Glycerin, 1,2-Ethandiol, Milchsäure, Polyethylenglycol, Natriumlactat (Natriumsalz der Milchsäure) und Sorbit ausgewählt ist, das Verdickungsmittel aus einem Derivat bzw. Polymerisat von (Meth)acrylsäure und/oder Xanthan ausgewählt ist und die Emulgatoren aus Estern oder ethoxylierten und/oder propoxylierten Fettalkaholen, Fettsäuren oder Zuckeralkoholen ausgewählt sind.

10. Mittel nach einem der Ansprüche 1 bis 9, zur Verwendung bei der Desinfektion der äußeren Extremitäten.

11. Mittel nach Anspruch 10, zur Verwendung bei der Desinfektion der Hände.
